# EUROPEAN PATENT APPLICATION

(11) **EP 0 756 272 A2**
(43) Date of publication of application: **29.01.1997**
(21) Application number: 96111966.6
(22) Date of filing: 25.07.1996
(51) Int. Cl.: G11B 5/62

(54) **Magnetic medium having permanent magnetic feature**

(30) Priority: 28.07.1995 US 1633; 05.06.1996 US 658343
(71) Applicant: EASTMAN KODAK COMPANY, Rochester, New York 14650-2201 (US)
(72) Inventor: Jeffers, Frederick John, c/o Eastman Kodak Co., Rochester, New York 14650-2201 (US); Jagielinski, Tomasz Marek, c/o Eastman Kodak Co., Rochester, New York 14650-2201 (US)
(74) Representative: Schmidt, Peter, Dipl.-Ing.

(57) **Abstract**

Magnetic medium having a permanent magnetic feature to prevent erasure and counterfeiting. The magnetic medium, in one form, includes a body having a two-dimensional grid pattern of magnetically acicular particles forming a permanent magnetic feature. The magnetic medium, in another form, includes a body having a permanent pattern of magnetically isotropic particles having a coercivity greater than 200 Oe, such pattern formed by varying concentrations of magnetically isotropic particles.

## Description

### Field of Invention

This invention relates to magnetic media having a permanent magnetic feature to prevent erasure and counterfeiting and, more particularly, this invention relates to magnetic media having a permanent pattern of either magnetically isotropic particles having a coercivity greater than 200 Oe, or a two-dimensional grid of magnetically acicular particles.

### Description Relative to the Prior Art

The counterfeiting of currency, stocks, bonds, credit cards and other valuable documents essential to the orderly and effective carrying-on of business and financial activities is a continuing serious problem. The wide spread availability of high quality imaging and reproduction systems increases the complexity of combating all forms of counterfeiting. One approach to making documents difficult to counterfeit is to make a watermark in the paper during manufacture which is only visible when viewed in transmitted light. This watermark is built into the paper and is difficult to duplicate unless one has a paper factory. Other approaches include holograms, opaque print strips, and microprinting which are incorporated into a document which can be detected to validate the document's authenticity. The effectiveness of these approaches depends upon the difficulties involved in counterfeiting them.

It has also been proposed to form a permanent magnetic feature in a document which cannot be erased or changed without destroying the document. In one technique, a nonerasable magnetic feature is produced in a magnetic medium by causing a spatially varying concentration of magnetic particles. Thus, U.S. Patent 4,239,959, issued December 16, 1980, inventor Gutterman, discloses a method of perpetuation of information in magnetically recorded medium. A permanent concentration variation magnetic record is formed by dispersing ordinary gamma ferric oxide or chromium oxide magnetic particles in a special paint which solidifies temporarily so that data can be recorded in a standard way. The recorded layer is then momentarily fluidized by application of heat, solvent or other means. Then, because of the magnetic repulsive forces between adjacent bits or magnetized regions, the particles experience some physical translational movement in the medium to form regions of low and high particle concentration which replicate the original data pattern. The medium is then solidified to form the permanent magnetic feature. The magnetic particles disclosed in this patent are of low coercivity, i.e., less than 100 Oe.

Japanese Kokai patent application 1994-20264, published January 28, 1994, inventors Kawajima, discloses a magnetic recording medium and its manufacturing method. The medium consists of a pattern of magnetic particles of coercivity less than 100 Oe, which is formed by varying concentration of the magnetic particles.

As disclosed in both of these patents, since the magnetic particles used in forming the permanent magnetic features are made of a low coercivity magnetic material, an external magnetic field is needed to read the magnetic pattern because of the low remanence of the particles.

Another technique for forming a permanent magnetic feature in a document is by causing a spatially varying orientation of highly magnetically anisotropic particles. This technique is disclosed in the following patents: U.S. Patent 3,998,160, issued December 21, 1976, inventor Pearce; U.S. Patent 4,197,989, issued April 15, 1980, inventor Pearce; UK Patent Application GB 2042979, published October 1, 1980, inventor Woolley; and U.S. Patent 3,171,106, issued February 23, 1965, inventor Lemmond. In general, the anisotropic magnetic particles are aligned in different preset directions in two or more regions of a magnetic media. The patterns of orientation of particles disclosed in these patents are relatively simple and do not meet the needs of deterring counterfeiting in the increasingly sophisticated and complex world of counterfeiters.

### Summary of the Invention

According to the present invention, there is provided a solution to the problems of the prior art enumerated above. According to one feature of the present invention, a magnetic medium is provided comprising a body having a permanent pattern of magnetically isotropic particles having a coercivity greater than 200 Oe, said pattern being formed of varying concentrations of said magnetically isotropic particles. This embodiment of the invention is advantageous because the relatively high coercivity of the magnetic particles forming the permanent magnetic feature, provide a higher remanence and higher magnetic signal field, thus, eliminating the need for an external magnetizing magnetic field to be applied while reading the permanent magnetic pattern.

According to another feature of the present invention, there is provided a magnetic medium comprising a body having a two-dimensional grid pattern of magnetically acicular particles forming a permanent magnetic feature. This feature of the invention has the advantage of being distinctive and harder to copy than the simple particle orientations disclosed in the prior art.

According to another feature of the present invention, a magnetic medium is provided, including a combination of the aforesaid two features.

### Brief Description of the Drawings

Figs. 1 and 2 are respective cross-sectional and top plan views of a magnetic medium according to one embodiment of the present invention;
Fig. 3 is a graphical view of a plots of easy and hard axes magnetization vs. field for anisotropic barium ferrite;
Fig. 4 is a diagrammatic view of a magnetic pattern in a permanent magnet;
Fig. 5 is a diagrammatic view of a magnetic pattern which has been thermoremanently recorded in barium ferrite loaded hot glue;
Fig. 6 is a diagrammatic view of the magnetic pattern of Fig. 5 after a 15,500 Oe magnetic field has been applied thereto;
Fig. 7 is a diagrammatic view of the magnetic pattern in the permanent magnet of Fig. 4 after a 15,500 Oe magnetic field has been applied to it;
Fig. 8 is a diagrammatic view showing a two-dimensional grid pattern recorded in BaFe loaded hot glue.
Fig. 9 is a diagrammatic view useful in explaining another embodiment of the present invention.

### Brief Description of the Invention

According to one embodiment of the present invention, a magnetic medium comprises a body having a permanent pattern of magnetically isotropic particles having a coercivity greater than 200 Oe, said pattern formed by varying concentrations of said magnetically isotropic particles. The method of making such a magnetic medium comprises the steps of: providing a fluidized dispersion of magnetically isotropic particles having a coercivity greater than 200 Oe; applying a magnetic field pattern to said fluidized dispersion of magnetically isotropic particles to form a pattern of said particles through local particle concentration variations; and solidifying said fluidized dispersion to form a permanent pattern of said isotropic magnetic particles.

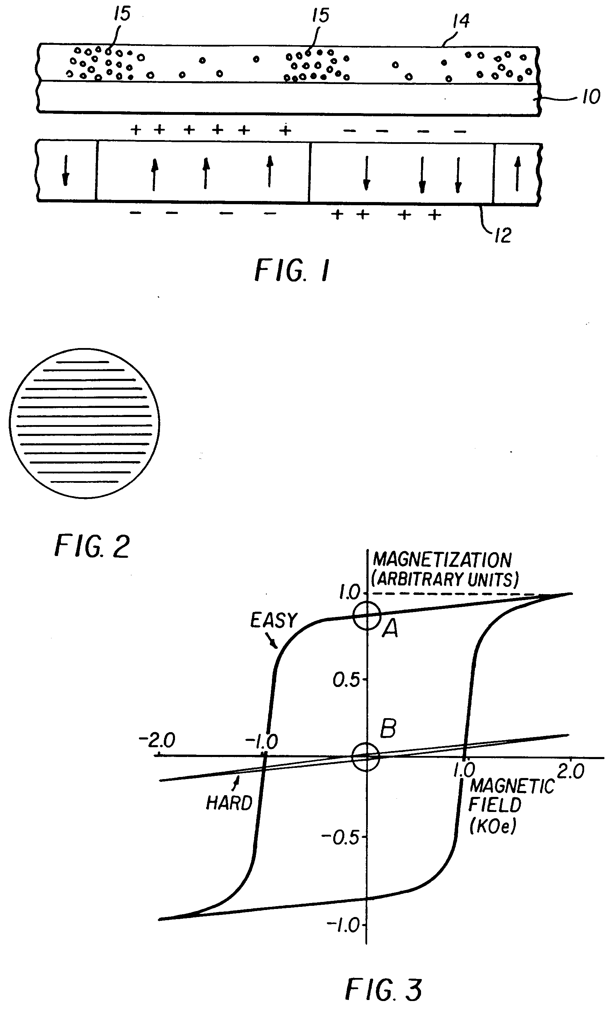

Fig. 1 shows one embodiment of the present invention wherein a 5-mil sheet of copier transparency 10 was placed on top of a 15-mil-thick rubber refrigerator permanent magnetic 12 which was recorded with an 18 flux change/inch pattern. A layer 14 of 230 Oe coercivity Fe₃O₄ particles 15 loaded ink was coated on the transparency sheet 10 and allowed to dry. The layer was then exposed to a very large dc field over 10,000 Oe. The resultant magnetic pattern is shown in Fig. 2. The pattern is made visible with a 3M Magnetic Viewer sold by Arnold Magnetics Co.

Because the pigment is isotropic with a remanence squareness of about 40%, the pattern of Fig. 2 is caused by local pigment concentration variations caused by the high field gradients over the permanent magnet 12 which varied the particle concentration before the ink dried. Once the ink is dry, the particle locations are fixed. Hence, this image is permanent. The pattern is not visible to the eye, but the resultant magnetic signal will be large if detected with a magnetic read head.

According to another embodiment of the present invention, the permanent magnetic feature is formed of a magnetic pigment, such as BaFe, which is highly anisotropic. The magnetic medium comprises a body having a two-dimensional grid pattern of magnetically acicular particles forming a permanent magnetic feature. The method of making such a magnetic medium comprises the steps of: providing a fluidized dispersion of magnetically acicular particles; applying a magnetic field having a two-dimensional grid pattern to said fluidized dispersion of magnetic acicular particles to align said particles in a two-dimensional grid pattern; and solidifying said fluidized dispersion so that two-dimensional grid pattern of magnetic acicular particles are formed into a permanent magnetic feature.

Fig. 3 shows the magnetic characteristics of a BaFe pigment which exhibits this effect in an extreme way.

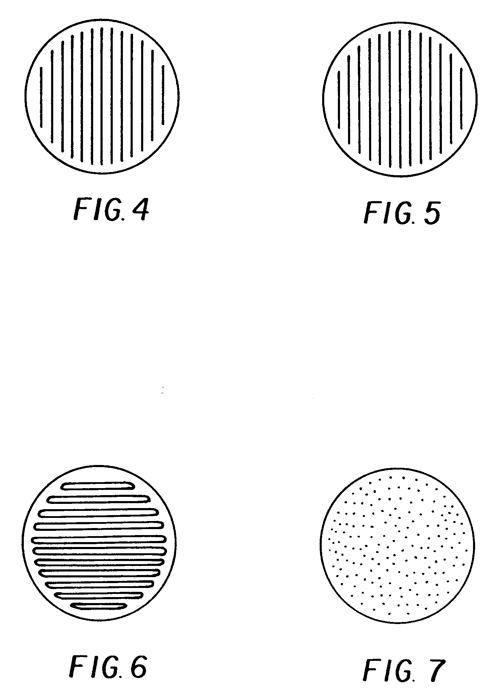

Fig. 4 shows the one-dimensional magnetic pattern in a conventional BaFe loaded rubber refrigerator permanent magnet. Fig. 5 shows the magnetic pattern remaining in a layer of BaFe loaded hot glue which was coated on a sheet of paper in contact with the refrigerator magnet and allowed to cool. The BaFe pigment concentration was about 20% by volume. The BaFe glue layer is only about 27 mils thick and cooled very quickly. The BaFe coercivity is about ten times higher than the field above the refrigerator magnet. The recording is accomplished through physical rotation of the BaFe particles.

Because of the magnetic anisotropy of the BaFe, shown by Fig. 3, applying a large magnetic field causes oppositely directed magnetizations to reverse, but particles at 90° to the applied field retain very little remanence. Hence, even after a 15,500 Oe field, which is more than three times the BaFe coercivity, the pattern shown below in Fig 6 remains. It is the second harmonic of the original pattern, but it cannot be magnetically erased. Application of a large field will recover the image. By contrast, Fig. 7 shows that no pattern at all remains in the unoriented refrigerator magnet after the 15,500 Oe field is applied. It has a coercivity of about 4,000 Oe.

Because this trial recorded pattern is made in hot glue, the pattern can be changed by reheating. If instead, the layer were made of ink or a glue that dries, the pattern would be truly permanent.

The magnetically recorded pattern in this magnetic watermark could be customized for individual document identification and could be easily suited for machine reading, especially with an MR head.

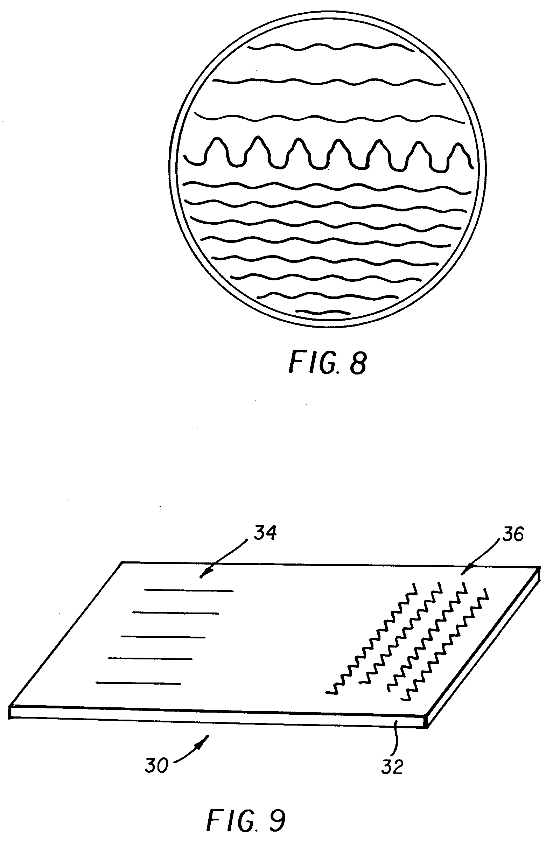

The preferred embodiment of this aspect of the invention involves a two-dimensional "grid" pattern that is much more difficult to duplicate than the on-dimensional patterns shown in Figs. 4, 5 and 6. Fig. 8 shows a 3.5x magnified photo of two types of two-dimensional grid patterns recorded in BaFe loaded hot glue. The master pattern is recorded in a 22 mil thick BaFe loaded rubber refrigerator magnet. The particles in the rubber magnet are not magnetically oriented. The recording is done in two steps using a very high field rather as described in U.S. Patent Application Serial No. 08/346,722, filed November 30, 1994, inventor F. Jeffers. The roller recorder is rolled over the refrigerator magnet in a given first direction, thus recording a first one-dimensional grid pattern in those BaFe particles which happen to be oriented substantially parallel to the local field from the roller recorder. Those BaFe particles which are oriented substantially perpendicular to the roller recorder field are not recorded, because of the extreme magnetic anisotropy of BaFe illustrated by Fig. 3.

The same or a different magnet size roller recorder is then rolled over the rubber refrigerator magnet at 90° to the initial direction. This again records those particles which are oriented substantially parallel to the roller recorder field and, most importantly, many of those particles which were recorded during the initial recording operation are unaffected. This is again because of the extreme magnetic anisotropy shown in Fig. 2. The initial one-dimensional pattern used in making the image in Fig. 8 was at 18 lines per inch and the second pattern was in two sections at 7 and 14 lines per inch, respectively.

The resultant magnetic field pattern above the rubber magnet is thus a superposition of the fields from the two orthogonal one-dimensional patterns and is understandably very complicated and difficult to duplicate.

When the BaFe loaded hot glue is cooled in near contact with the two-dimensionally patterned rubber magnet an excellent copy is produced which is shown in Fig. 9.

As discussed earlier, this pattern is contained in the very complicated orientations of the BaFe particles contained in the hot glue and cannot be erased in the sense discussed earlier in comparing Figs. 5 and 6.

This same two-dimensional grid pattern can be used to great advantage in creating a similar magnetic image using the isotropic 200 Oe and greater coercivity Fe₃O₄ pigment described earlier in connection with the first aspect of the invention. Here, the image is contained in the two-dimensional pattern of particle concentration and also cannot be erased once the ink or glue has dried.

The two-dimensional grid pattern of Fig. 9 is only illustrative of the patterns that can be created. Other more complicated patterns can be easily made by rolling the rubber magnet at zero and at some other angle than 90°, say 45°, or by using a roller recorder having different sized magnets.

Referring to Fig. 9 there is shown another embodiment of the present invention combining the two embodiments described above. As shown, a magnetic medium 30 comprises a body 32 with a first region 34 having a two-dimensional grid pattern of magnetically acicular particles forming a permanent magnetic feature and with a second region 36 having a permanent pattern of magnetically isotropic particles having a coercivity greater than 200 Oe, said pattern formed by varying concentrations of said magnetically isotropic particles. The magnetic medium can be made using the individual methods described above.

The invention has been disclosed in detail with respect to preferred embodiments thereof, but it will be understood that variations and modifications can be effected within the spirit and scope of the invention.

## Claims

1. A magnetic medium comprising
a body having a two-dimensional grid pattern of magnetically acicular particles forming a permanent magnetic feature.

2. The magnetic medium of claim 1 wherein said body includes a nonmagnetic support layer and a layer having said two dimensional grid pattern of magnetically acicular particles.

3. The magnetic medium of claim 1 wherein said magnetically acicular particles are barium ferrite particles.

4. A method of making a magnetic medium comprising the steps of:
providing a fluidized dispersion of magnetically acicular particles;
applying a magnetic field having a two-dimensional grid pattern to said fluidized dispersion of magnetic acicular particles to align said particles in a two-dimensional grid pattern; and
solidifying said fluidized dispersion so that two-dimensional grid pattern of magnetic acicular particles are formed into a permanent magnetic feature.

5. A magnetic medium comprising
a body having a permanent pattern of magnetically isotropic particles having a coercivity greater than 200 Oe, said pattern formed by varying concentrations of said magnetically isotropic particles.

6. The magnetic medium of claim 5 wherein said body includes a nonmagnetic support layer and a layer having said permanent pattern of magnetically isotropic particles.

7. The magnetic medium of claim 5 wherein said magnetically isotropic particles are Fe₃O₄ magnetic particles having a coercivity of 225-235 Oe.

8. A method of making a magnetic medium comprising the steps of:
providing a fluidized dispersion of magnetically isotropic particles having a coercivity greater than 200 Oe;
applying a magnetic field pattern to said fluidized dispersion of magnetically isotropic particles to form a pattern of said particles through local particle concentration variations; and
solidifying said fluidized dispersion to form a permanent pattern of said isotropic magnetic particles.

9. A magnetic medium comprising
a body with a first region having a two-dimensional grid pattern of magnetically acicular particles forming a permanent magnetic feature and with a second region having a permanent pattern of magnetically isotropic particles having a coercivity greater than 200 Oe, said pattern formed by varying concentrations of said magnetically isotropic particles.
